Europäisches Patentamt

European Patent Office

Office européen des brevets

(11) Veröffentlichungsnummer: **0 388 349**
**A2**

## (12) EUROPÄISCHE PATENTANMELDUNG

(21) Anmeldenummer: 90710003.6

(22) Anmeldetag: 06.02.90

(51) Int. Cl.⁵: **A01M 25/00**

(30) Priorität: 07.02.89 DE 8901363 U

(43) Veröffentlichungstag der Anmeldung:
**19.09.90 Patentblatt 90/38**

(84) Benannte Vertragsstaaten:
**AT BE CH DE FR GB IT LI LU NL**

(71) Anmelder: **Krussig, Johannes
August-Pfänder-Strasse 9
D-7440 Nürtingen(DE)**

(72) Erfinder: **Krussig, Johannes
August-Pfänder-Strasse 9
D-7440 Nürtingen(DE)**

(54) Schneckenfalle.

(57) Die Schneckenfalle nach Anspruch 1 besteht aus:

    1 Behälterteil
    1 Dach
    2 Stützen

Das Behälterteil liegt am Boden auf und dient zur Aufnahme des Schneckenbekämpfungsmittels und der Schneckenkadaver.

Das Behälterteil ist versehen mit einem Griff zum Ein- und Ausschwenken. Eine Nut dient dabei zum Einstecken in die eine Stütze und eine zweite, quer zur ersten angeordnete Nut, zum Einrasten in die zweite Stütze.

Die beiden Stützen sind mit Griffmulden versehen und dienen zum Aufstecken und Auflegen des Daches, zum Fixieren des Behälterteiles und zum stabilen Verankern im Boden.

Das Dach deckt das Behälterteil grossflächig ab und gibt den Abstand der Stützen zum Fixieren des Behälterteiles vor.

Die Teile der Schneckenfalle werden aus witterungsbeständigem, stabilem, olivgrünem Kunststoff hergestellt.

Die Schneckenfalle bietet folgende Vorteile:

- Grossräumige, voll nutzbare Grundfläche des Behälterteiles
- Einfache und relativ ästethische Handhabung beim Ver- und Entsorgen durch das herausnehmbare Behälterteil
- Stabile Verankerung im Boden
- Die flache Bauweise macht die Schneckenfalle unauffällig und und verhindert die Berührung des Bekämpfungsmittels durch Kinder und Nutztiere
- Schutz des Bekämpfungsmittels gegen Witterungseinflüsse durch Überdachung, Wirkstoffe bleiben erhalten
- Keine giftigen Bestandteile gelangen in den Boden, dadurch ist eine Bekämpfung der Schnecken auch in Gewässernähe, wie Gartenteiche, möglich.

**Schneckenfalle**

Die Erfindung betrifft eine Schneckenfalle nach dem Gattungsbegriff von Anspruch 1.

Eine Schneckenfalle der vorstehenden Art is u.a. Gegenstand des DE-GM 23 27 776.5.

Der **Erfindung** liegt die Aufgabe zugrunde, der Schneckenfalle der eingangs genannten Art in der Weise weiter zu entwickeln, daß der napfartige Behälter zur Ver- und Entsorgung in einfacher und schneller Weise unter dem Dach herausgeschwenkt und anschließend wieder in Arbeitsstellung gebracht werden kann.

Gemäß der **Erfindung** wird diese Aufgabe dadurch gelöst, daß das Dachteil mittels eines ersten und eines zweiten im wesentlichen einander gegenüberliegenden Stellen seines Randes angeordneten, in die Erde gesteckten stabartigen Teiles mit Abstand von der Erde gehalten ist, und daß der Behälter in einer zu Erdoberfläche parallelen Ebene schwenkbar an dem ersten stabartigen Teil gelagert ist.

Einzelheiten der **Erfindung** ergeben sich aus den Unteransprüchen und aus der Beschreibung, in der im folgenden anhand der Zeichnung einige Ausführungsformen der Erfindung erläutert sind. Dabei zeigt:

Fig.1 einen Schnitt durch eine erfindungsgemässe Anordnung entlang der Linie I-I in Fig.2,

Fig.2 einen Schnitt durch die Anordnung gemäß Fig.1 entlang der Linie II-II in Fig.1, und

Fig.3 die Ansicht einer anderen Ausführungsform der Erfindung von oben ohne Dachteil.

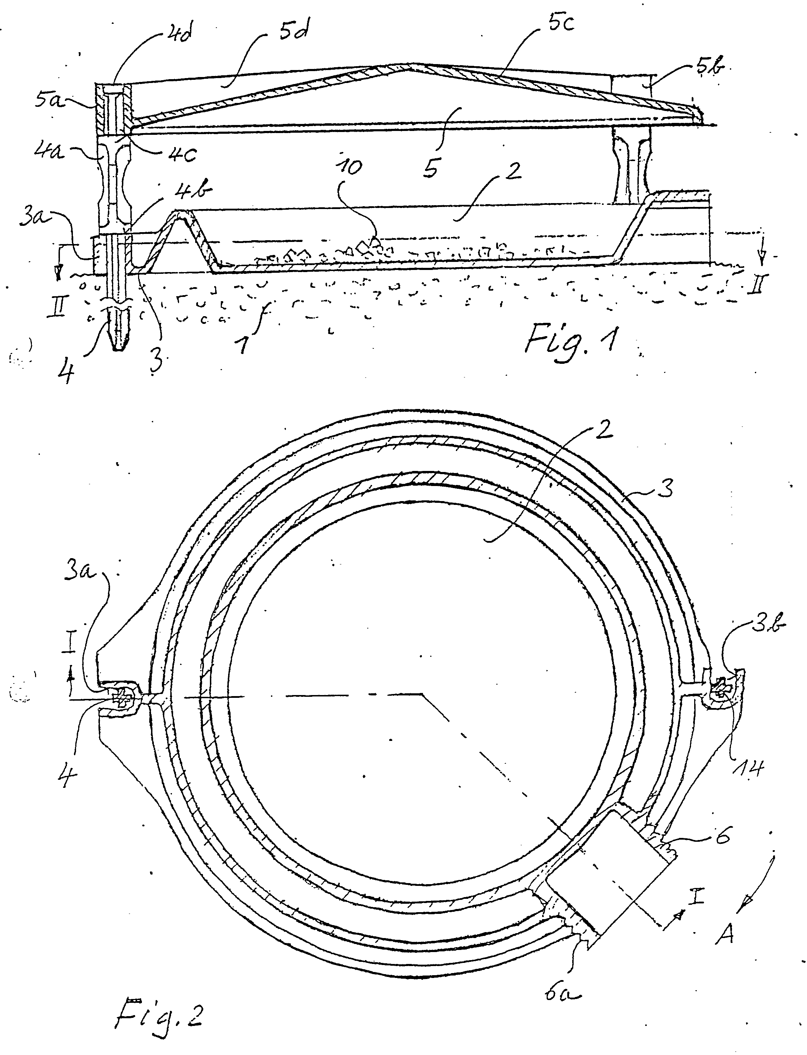

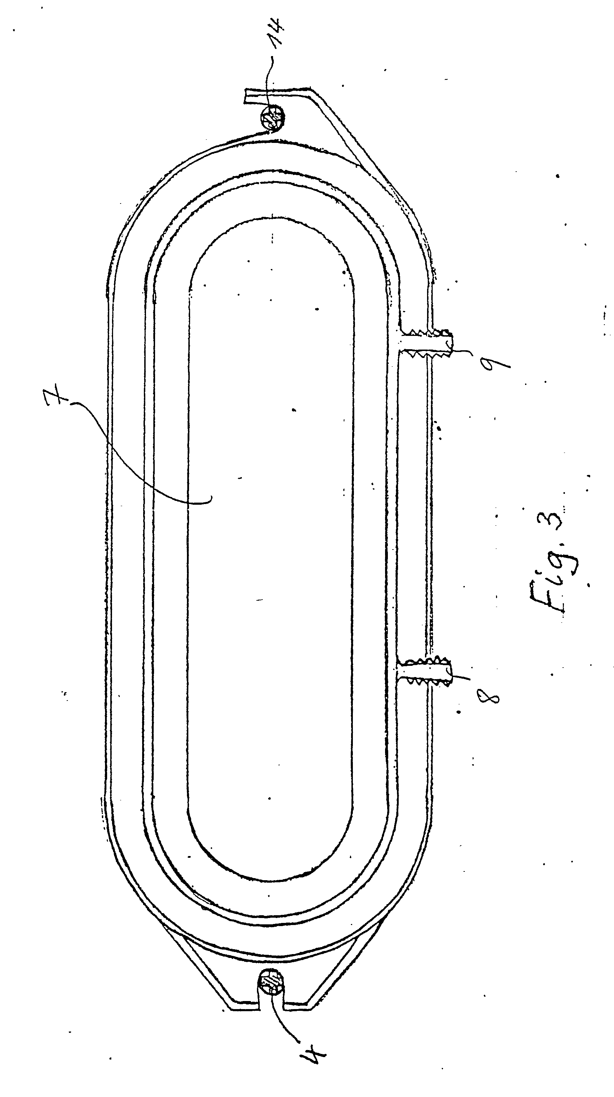

Gemäß den Figuren 1 und 2 liegt dem Erdboden 1 ein im wesentlichen kreisförmiger, napfartiger Behälter 2 auf, welcher zur Aufnahme eines Schneckenvertilgungsmittels 10 in fester oder flüssiger Form bestimmt ist. An einem Rand 3 des aus Kunststoff bestehenden napfartigen Behälters 2 sind gabelförmige Öffnungen 3a und 3b angeformt, welche je einen in die Erde gesteckten stabartigen Teil 4, 14 umfassen. Dadurch ,daß die stabartigen Teile 4,14 nicht den napfartigen Behälter selbst, sondern einen an diesen Behälter angeformten Rand durchdringen, kann der Behälter 2 mehr Schneckenbekämpfungsmittel aufnehmen und ist auch leichter zu reinigen.

Die stabartigen Teile 4,14 weisen, wie in der Zeichnung anhand des Stabes 4 gezeigt, einen sternförmig erweiterten Teil 4a auf. Dieser sternförmig erweiterte Teil 4a dient einmal als Griffstück zum Eindrücken des stabartigen Teiles 4 bzw. 14 in die Erde. Zum andern bildet er mit den zu seinen beiden Seiten entstehenden Auflageflächen 4b und 4c einen Abstandshalter zwischen dem napfartigen Behälter 2 und einem mit Abstand von dem napfartigen Behälter 2 auf die stabartigen Teile 4,14 aufgesteckten, ebenfalls aus Kunststoff bestehenden Dachteil 5.

An das Dachteil 5 sind an zwei einander diametral gegenüberliegenden Stellen seines äusseren Randes Buchsen 5a und 5b angeformt, welche jeweils auf einen stiftartigen Ansatz 4d des stabartigen Teiles 4 aufgesteckt sind. Das auf die Ansätze 4d aufgesteckte Dachteil 5 schützt das im napfartigen Behälter befindliche Schneckenbekämpfungsmittel 10 gegen Witterungseinflüsse, wie Regen und Sonneneinstrahlung. Die Oberseite des Dachteiles 5 ist zur Mitte hin kegelförmig ansteigend gestaltet, sodaß Regen oder Spritzwasser leicht abfließen können. Auf der Oberseite des Dachteiles 5 sind von dan Buchsen 5a und 5b zur Spitze des Dachteiles 5 verlaufende Verstärkungsrippen 5d angeformt.

Zum Zwecke des Einbringens und Ergänzens des Schneckenbekämpfungsmittels und zum Entfernen der Schneckenkadaver aus dem napfartigen Behälter 2 wird der napfartige Behälter unter dem dachartigen Teil 5 herausgeschwenkt. Um sicherzustellen, daß diese Schwenkbewegung in kontrollierter Weise mit einem der stabartigen Teile 4 als Zentrum vor sich geht, ist eine der gabelförmigen Öffnungen 3a radial und die andere gabelförmige Öffnung 3b tangential zur Schwenkrichtung A angeordnet.

Um den Behälter 2 während der Schwenkbewegung bequem erfassen zu können, ist an einer von Schwenkzentrum entfernten Stelle des Behälters ein mit einem Rändel 6a versehener Handgriff 6 angeformt. An diesem Handgriff 6 kann der napfartige Behälter um den ersten stabartigen Teil 4 in Pfeilrichtung A unter dem Dachteil 5 herausgeschwenkt und, sobald der zweite stabartige Teil 14 von der gabelförmigen Öffnung 3b freigegeben ist, in Längsrichtung der gabelförmigen Öffnung 3a unter dem Dachteil hervorgezogen werden. Nach dem Entleeren, Reinigen und Wiederfüllen des Behälters 2 kann er in umgekehrter Reihenfolge wieder unter dem Dachteil 5 eingesetzt werden, wobei er ohne besonderes Zutun der Bedienungsperson seine richtige Lage wieder einnimmt, sobald er mit der als Anschlag wirkenden gabelförmigen Öffnung 3b in Eingriff gekommen ist.

Gemäß Fig.3 ist bei sonst mit dem Ausführungsbeispiel gemäß den Figuren 1 und 2 übereinstimmender Anordnung zwischen den stabartigen Teilen 4 und 14 ein länglicher, napfartiger Behälter 7 eingefügt, der mit Handgriffen 8 und 9 versehen ist. Das in diesem Falle nicht näher dargestellte Dachteil weist eine entsprechend längliche Form auf, wobei die beiden stabartigen Teile 4 und 14 benachbart zu den Enden des Behälters bzw. des Dachteiles angeordnet sind.

Aus diesen länglichen Behältern, die bezüglich der Leerung, Reinigung und Wiederbefüllung ähnliche Vorteile wie die kreisrunden Behälter aufweisen, läßt sich eine sogenannte Schneckenbarriere bauen, mittels derer die Schnecken zuverlässig von einem besonders zu schützenden Abschnitt eines Gartenbetes ferngehalten werden können.

**Ansprüche**

1. Schneckenfalle, mit einem der Erde aufliegenden, napfartigen Behälter zum Einbringen des Schneckenbekämpfungsmittels, und mit einem mittels mindestens eines in die Erde gesteckten, stabartigen Teiles mit Abstand über dem Behälter gehaltenen Dachteil zum Schutz des Schneckenbekämpfungsmittels gegen Witterungseinflüsse, **dadurch gekennzeichnet,** daß das Dachteil (5) mittels eines ersten und eines zweiten an im wesentlichen einander gegenüberliegenden Stellen seines Randes angeordneten, in die Erde gesteckten stabartigen Teiles (4,14) mit Abstand von der Erde (1) gehalten ist, und daß der Behälter (2,7) in einer zur Erdoberfläche parallelen Richtung (A) schwenkbar an dem ersten stabartigen Teil (4) gelagert ist.

2. Schneckenfalle nach Anspruch 1, dadurch gekennzeichnet, daß der Behälter (2,7) einen in der unter das Dachteil (5) geschwenkten Lage des Behälters mit dem zweiten stabartigen Teil (14) in Eingriff kommenden Anschlag (3b) trägt.

3. Schneckenfalle nach Anspruch 1 oder 2, dadurch gekennzeichnet, daß mindestens an dem ersten stabartigen Teil (4) ein die Einhaltung des vorgegebenen Abstandes zwischen dem Behälter (2,7) und dem Dachteil (5) während der Schwenkbewegung aufrecht erhaltender Abstandshalter (4a) angeordnet ist.

4. Schneckenfalle nach einem der vorhergehenden Ansprüche, dadurch gekennzeichnet, daß an dem Behälter (2,7) mit Abstand von dem ersten stabartigen Teil (4) ein Handgriff (6,7,8) zum Schwenken des Behälters angeordnet ist.

5. Schneckenfalle nach einem der vorhergehenden Ansprüche, dadurch gekennzeichnet, daß der erste (4) und der zweite (14) stabartige Teil von je einem Rund- oder Profilstab gebildet wird, und daß am äußeren Rand (3) des Behälters eine erste (3a), den ersten stabartigen Teil (4) radial zur Schwenkrichtung (A) und eine zweite (3b), den zweiten stabartigen Teil (14) tangential zur Schwenkrichtung (A) umfassende, gabelförmige Öffnung angeordnet ist.

6. Schneckenfalle nach einem der Ansprüche 1 bis 5, dadurch gekennzeichnet, daß der Behälter (2) im wesentlichen kreisförmig ist.

7. Schneckenfalle nach einem der Ansprüche 1 bis 5, dadurch gekennzeichnet, daß der Behälter (7) zur Bildung einer Schneckenbarriere eine längliche Form aufweist, wobei die beiden stabartigen Teile (4,14) benachbart zu den Enden des länglichen Behälters (7) angeordnet sind.

Fig. 1

Fig. 2

Fig. 3

EP 0 388 349 A2